# EUROPEAN PATENT APPLICATION

(11) **EP 3 627 289 A1**
(43) Date of publication of application: **25.03.2020**
(21) Application number: 18213371.0
(22) Date of filing: 18.12.2018
(51) Int. Cl.: G06F 3/01

(54) **TRACKING SYSTEM AND TRACKING METHOD USING THE SAME**

(30) Priority: 19.09.2018 US 201816136198
(71) Applicant: XRSpace CO., LTD., Taoyuan City 330 (TW)
(72) Inventor: Chou, Peter, 100 Taipei City (TW); Lin, Chun-Wei, 330 Taoyuan City (TW); Hsieh, Yi-Kang, 310 Hsinchu County (TW); Wu, Chia-Wei, 231 New Taipei City (TW)
(74) Representative: Straus, Alexander

(57) **Abstract**

A tracking system (10), for tracking a body movement of a user, the tracking system (10) includes a head-mounted display, abbreviated to HMD, worn on a head of a user for collecting a head information of the user; a first sensor (104_1), worn on an ankle of the user for collecting a first ankle information of the user; and a second sensor (104_2), worn on another ankle of the user for collecting a second ankle information; wherein a first relation exists between the head information and the first ankle information, a second relation exists between the head information and the second ankle information and a third relation exists between the first ankle information and the second ankle information; wherein the tracking system (10) determines the body movement of the user by the head information, the first ankle information, the second ankle information, the first relation, the second relation and the third relation.

## Description

### Field of the Invention

The present disclosure relates to a tracking system and tracking method.

### Background of the Invention

With the advancement and development of technology, the demand of interactions between a computer game and a user is increased. Human-computer interaction technology, e.g. somatosensory games, virtual reality (VR) environment, augmented reality (AR) environment, mixed realty (MR) environment and extended reality (XR) environment, becomes popular because of its physiological and entertaining function. The conventional technology virtualizes the user by tracking movements of the user with an outside-in tracking method, which traces scene coordinates of moving objects in real-time, such as head-mounted displays (HMDs), motion controller peripherals or cameras. In this way, the HMDs, the motion controller peripherals or cameras may work together to react to gestures made by the user in the VR/AR/MR/XR environment, so as to simultaneously provide interactions to the user in the VR/AR/MR/XR environment.

However, the body movements of the user are free to change positions as forward/backward (i.e. surge), up/down (i.e. heave), left/right (i.e. sway) translations in three perpendicular axes, which are combined with changes in orientation through rotation about three perpendicular axes. The conventional tracking system in the VR/AR/MR/XR environment is needed to be equipped with at least four sensors, outside-in trackers and cameras to sense the body movements of the user, which results in inconveniences to the user when experiencing the VR/AR/MR/XR environment.

### Summary of the Invention

Therefore, the present disclosure provides a tracking system and tracking method to provide a better user experience.

This is achieved by a tracking system according to the independent claim 1 or by a tracking method according to the independent claim 6 here below. The dependent claims pertain to corresponding further developments and improvements.

As will be seen more clearly from the detailed description following below, the claimed tracking system, for tracking a body movement of a user, the tracking system includes a head-mounted display, abbreviated to HMD, worn on a head of a user for collecting a head information of the user; a first sensor, worn on an ankle of the user for collecting a first ankle information of the user; and a second sensor, worn on another ankle of the user for collecting a second ankle information; wherein a first relation exists between the head information and the first ankle information, a second relation exists between the head information and the second ankle information and a third relation exists between the first ankle information and the second ankle information; wherein the tracking system determines the body movement of the user by the head information, the first ankle information, the second ankle information, the first relation, the second relation and the third relation.

In another aspect, the claimed tracking method, for a head-mounted display (HMD) system, is provided. The HMD virtualizes a body movement of a user in a virtual environment. The tracking method comprises collecting a head information, a first ankle information, a second ankle information of the user by a HMD and a plurality of sensors, wherein a first relation exists between the head information and the first ankle information, a second relation exists between the head information and the second ankle information and a third relation exists between the first ankle information and the second ankle information; and determining the body movement of the user according to the head information, the first ankle information, the second ankle information, the first relation, the second relation and the third relation.

### Brief Description of the Drawings

FIG. 1 is a schematic diagram of a tracking system according to an embodiment of the present disclosure.
FIG. 2 is a schematic diagram of an implementation example of the tracking system according to an embodiment of the present disclosure.
FIG. 3 is a schematic diagram of a tracking process according to an embodiment of the present disclosure.

### Detailed Description

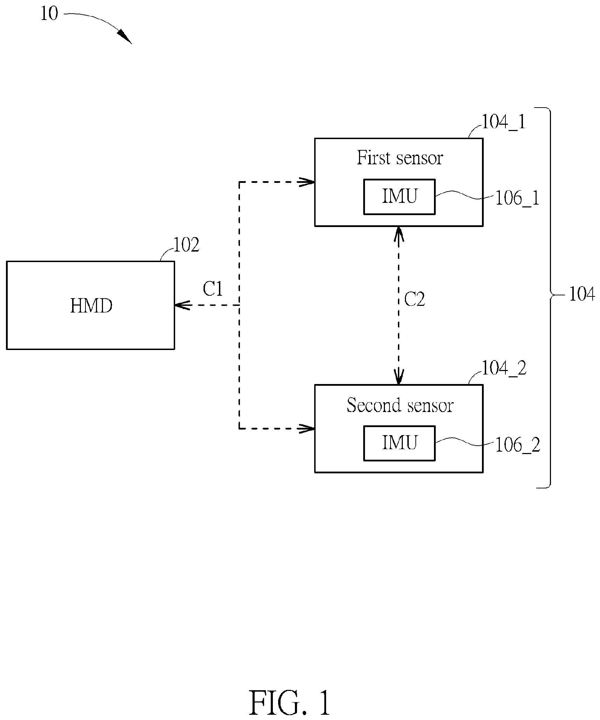

Please refer to FIG. 1, which is a schematic diagram of a tracking system 10 according to an embodiment of the present disclosure. The tracking system 10 includes a head-mounted display (HMD) 102 and a plurality of sensors 104. The HMD 102 may be worn on a head of a user for collecting a head information of the user. The sensors 104 may be worn on both ankles of the user for collecting a first ankle information and a second ankle information of the user. The tracking system 10 determines the body movement of the user by the head information, the first ankle information, the second ankle information and relations among them. The determined body movement may be transmitted to the HMD 102, such that the HMD 102 may display the determined body movement in a scene via a virtual avatar. Therefore, the tracking system 10 of the present disclosure not only obtains the head information and ankle information of the user by the HMD and the sensors, but also utilizes a first relation between the head information and the first ankle information, a second relation between the head information and the second ankle information and a third relation between the first ankle information and the second ankle information as judging factors for determining the body movement, e.g. for calibrating the head information and the ankle information, so as to improve the accuracy of tracking results and improve the user experience.

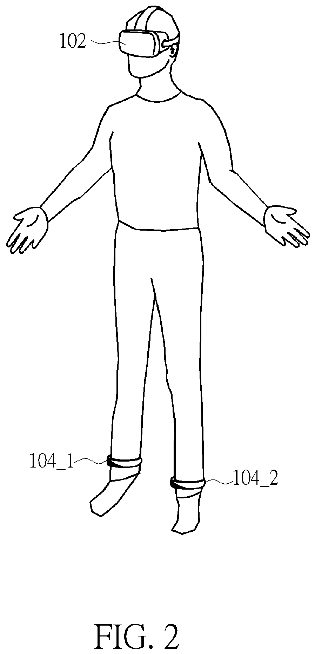

As shown in FIG. 2, in an embodiment, the sensors 104 of the present disclosure includes a first sensor 104_1 and a second sensor 104_2. The first sensor 104_1 and the second sensor 104_2 respectively includes a first inertial measurement unit (IMU) 106_1 and a second IMU 106_2 to simulate a first coordinate of the first sensor 104_1 and simulate a second coordinate of the second sensor 104_2. A relative distance and a relative position of the sensors may be obtained by the first coordinate and the second coordinate. The relative distance and the relative position of the sensors may be taken as the third relation of the first and the second ankle information. In other embodiments, the third relation may include a vector difference or a momentum difference in 3D movement between the sensors.

In an embodiment, the HMD includes a third IMU to simulate a third coordinate of the HMD. A relative position and a relative distance are obtained between the HMD and the first sensor by the first coordinate and the third coordinate. The relative position and the relative distance between the HMD and the first sensor may be the first relation. A relative position and a relative distance are obtained between the HMD and the second sensor by the first coordinate and the second coordinate. The relative position and the relative distance between the HMD and the second sensor may be the second relation. In other embodiments, the first relation and the second relation may include a vector difference or a momentum difference in 3D movement among the HMD and the two sensors.

In an embodiment, a magnetic meter or a spherical antenna array may be added to the sensors to calibrate their locations and improve the accuracy of the tracking results of the tracking system 10.

In an embodiment, the HMD 102 may connect to the sensors 104 respectively via a first connection C1, such that the HMD 102 and the sensors 104 may share locations, 3D movement vectors and momentums to each other. The sensors 104 may connect to each other via a second connection C2, such that the sensors 104 may share locations, 3D movement vectors and momentums to each other. The HMD 102 may calculate the first relation, the second relation and the third relation according to the first connection C1 and the second connection C2, anyone of the sensors 104 may be utilized for calculating the first relation, the second relation and the third relation, such that the tracking system 10 may allocate calculation tasks on the HMD 102 and the sensors 104 based on individual calculation abilities to improve the efficiency of real-time calculation.

In an embodiment, the first connection C1 and the second connection C2 may be implemented by any one of the wireless communication (e.g. Bluetooth), ultrasonic, laser, or magnetic force.

In an embodiment, the sensors 104 may be six degrees-of-freedom (DOF) sensors or 3 DOF sensors. Since the present disclosure not only collects the head information and ankle information, but also collects the first relation, the second relation and the third relation to determine the body movement, more accurate tracking results may be obtained no matter by utilizing 6 DOF sensors or 3 DOF sensors.

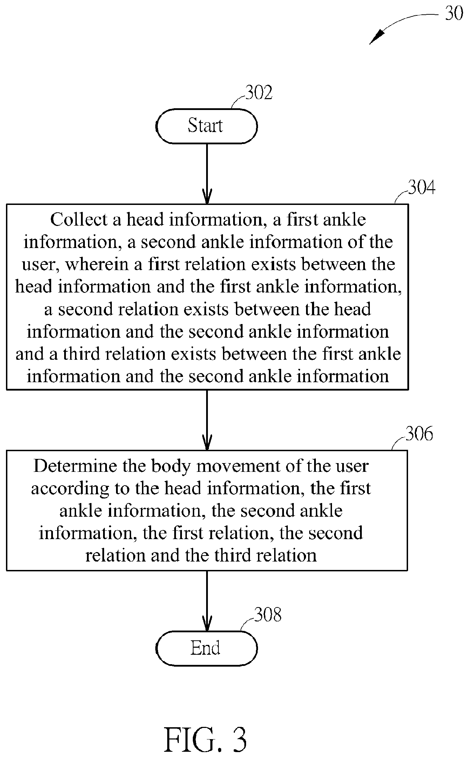

Based on different applications and design concepts, the tracking system 10 of the present disclosure may be implemented in all kinds of methods. Furthermore, the operating process of the tracking system 10 may be concluded to a tracking process 30 as shown in FIG. 3, which includes the following steps:
Step 302: Start.
Step 304: Collect a head information, a first ankle information, a second ankle information of the user, wherein a first relation exists between the head information and the first ankle information, a second relation exists between the head information and the second ankle information and a third relation exists between the first ankle information and the second ankle information.
Step 306: Determine the body movement of the user according to the head information, the first ankle information, the second ankle information, the first relation, the second relation and the third relation.
Step 308: End.

The details of the tracking process 30 may be referred to the above mentioned embodiments of the tracking system 10 and are not narrated herein for brevity.

In summary, the present disclosure provides a tracking system 10 and related tracking method, which is utilized for obtaining more precise the tracking results and provides a better user experience when the user experiences the VR/AR/MR/XR environment.

## Claims

1. A tracking system (10), for tracking a body movement of a user and the tracking system (10) is **characterized by** comprising:
a head-mounted display (102), abbreviated to HMD, worn on a head of a user for collecting a head information of the user;
a first sensor (104_1), worn on an ankle of the user for collecting a first ankle information of the user; and
a second sensor (104_2), worn on another ankle of the user for collecting a second ankle information;
wherein a first relation exists between the head information and the first ankle information, a second relation exists between the head information and the second ankle information and a third relation exists between the first ankle information and the second ankle information;
wherein the tracking system (10) determines the body movement of the user by the head information, the first ankle information, the second ankle information, the first relation, the second relation and the third relation.

2. The tracking system (10) of claim 1, **characterized in that** the first sensor (104_1) includes a first inertial measurement unit (106_1), abbreviated to IMU, to simulate a first coordinate of the first sensor (104_1), and the second sensor (104_2) includes a second IMU (106_2) to simulate a second coordinate of the second sensor (104_2) and the third relation includes a relative distance and a relative position between the first coordinate and the second coordinate.

3. The tracking system (10) of claim 2, **characterized in that** the HMD (102) includes a third IMU to simulate a third coordinate of the HMD (102), and the first relation includes a distance and a relative position between the first coordinate and the third coordinate, the second relation includes a distance and a relative position between the second coordinate and the third coordinate.

4. The tracking system (10) of claim 2, **characterized in that** the first coordinate of the first sensor (104_1) and the second coordinate of the second sensor (104_2) are shared to the HMD (102) via a first connection C1 and shared to each other via a second connection C2.

5. The tracking system (10) of claim 2, **characterized in that** the first sensor (104_1) includes a magnetic meter or a spherical antenna array for calibrating a position of the first sensor (104_1).

6. A tracking method (30), for tracking a body movement of a user and the tracking method (30) comprising:
collecting a head information, a first ankle information, a second ankle information of the user by a HMD and a plurality of sensors (104, 104_1, 104_2), wherein a first relation exists between the head information and the first ankle information, a second relation exists between the head information and the second ankle information and a third relation exists between the first ankle information and the second ankle information (304); and
determining the body movement of the user according to the head information, the first ankle information, the second ankle information, the first relation, the second relation and the third relation (306).

7. The tracking method (30) of claim 6, **characterized in that** the plurality of sensors (104, 104_1, 104_2) include a first sensor (104_1) and a second sensor (104_2), the first sensor (104_1) includes a first IMU (106_1) to simulate a first coordinate of the first sensor (104_1), and the second sensor (104_2) includes a second IMU (106_2) to simulate a second coordinate of the second sensor (104_2) and the third relation includes a relative distance and a relative position between the first coordinate and the second coordinate.

8. The tracking method (30) of claim 7, **characterized in that** the HMD (102) includes a third IMU to simulate a third coordinate of the HMD (102), and the first relation includes a distance and a relative position between the first coordinate and the third coordinate, the second relation includes a distance and a relative position between the second coordinate and the third coordinate.

9. The tracking method (30) of claim 7, **characterized in that** the first coordinate of the first sensor (104_1) and the second coordinate of the second sensor (104_2) are shared to the HMD (102) via a first connection C1 and shared to each other via a second connection C2.

10. The tracking method (30) of claim 7, **characterized in that** the first sensor (104_1) includes a magnetic meter or a spherical antenna array for calibrating a position of the first sensor (104_1).
